# EUROPÄISCHE PATENTANMELDUNG

(11) **EP 4 631 798 A1**
(43) Veröffentlichungstag der Anmeldung: **15.10.2025**
(21) Anmeldenummer: 25168461.9
(22) Anmeldetag: 04.04.2025
(51) Int. Cl.: B60R 21/38

(54) **HEBESYSTEM FÜR EINE KAROSSERIEHAUBE EINES KRAFTFAHRZEUGS**

(30) Priorität: 12.04.2024 DE 102024110359
(71) Anmelder: VOLKSWAGEN AG, 38440 Wolfsburg (DE); Edscha Engineering GmbH, 42855 Remscheid (DE)
(72) Erfinder: Godau, Stefan, 38547 Calberlah (DE); Nuck, Udo, 39291 Hohenwarthe (DE); Michael, Stefan, 38836 Badersleben (DE); Ackers, Heiner, 58313 Herdecke (DE); Stranimaier, Sebastian, 42109 Wuppertal (DE)
(74) Vertreter: Bungartz, Florian

(57) **Zusammenfassung**

Hebesystem zum Bewegen einer Karosseriehaube (2) eines Kraftfahrzeugs (1) von einer Normalstellung in eine Kollisionsstellung, mit
• einem Hebegelenk (9), das einen zur Verbindung mit der Karosseriehaube (2) eingerichteten Haubenteil (12) und einen zur Verbindung mit einem anderen Abschnitt einer Karosserie des Kraftfahrzeugs (1) verbundenen Karosserieteil (13), wobei der Haubenteil (12) und der Karosserieteil (13) über ein Gelenksystem beweglich miteinander verbunden sind, sowie mindestens ein vorgespanntes Federelement zum Bewegen des Haubenteils (12) von der Normalstellung in die Kollisionsstellung umfasst.
• einem Auslöseaktuator (10) zum Bewegen der Karosseriehaube (2) von der Normalstellung in die Kollisionsstellung oder zum Lösen eines Verriegelungssystems des Hebegelenks (9), das die Karosseriehaube (2) in der Normalstellung verriegelt, und
• einem Rückstellaktuator (11) zum Bewegen der Karosseriehaube (2) von der Kollisionsstellung in die Normalstellung.

Der Auslöseaktuator (10) und/oder der Rückstellaktuator (11) wirkt indirekt, insbesondere über jeweils einen Bowdenzug, auf das Hebegelenk (9).

## Beschreibung

Die Erfindung betrifft ein Hebesystem zum Bewegen einer Karosseriehaube eines Kraftfahrzeugs von einer Normalstellung in eine Kollisionsstellung, wobei eine Betätigung des Hebesystems mittels eines Kollisionsermittlungssystems des Kraftfahrzeugs auslösbar ist.

Ein solches Hebesystem ist aus der EP 3 708 439 A1 bekannt. Das Bewegen der Karosseriehaube, bei der es sich um eine Fronthaube des Kraftfahrzeugs handelt, dient dazu, in der Kollisionsstellung, die infolge einer Kollision mit einem Hindernis eingestellt wurde, eine ausreichende Distanz zwischen der Karosseriehaube und einer unter der Karosseriehaube liegenden, im Wesentlichen nicht deformierbaren Komponente, insbesondere einem Verbrennungsmotor, zu schaffen. Dadurch soll sich die Karosseriehaube im Falle einer Kollision mit einer Person ausreichend weitgehend deformieren können, bevor eine weitergehende Deformation durch einen Kontakt mit der darunterliegenden Komponente verhindert ist. Damit kann die Belastung, die eine Person infolge eines Aufpralls auf die Motorhaube erfährt, relativ gering gehalten werden.

Das System einer sich automatisch im Falle einer Kollision aufstellenden Fronthaube wird häufig auch als aktive Fronthaube bezeichnet.

Häufig erfolgt das Aufstellen einer aktiven Fronthaube mittels eines pyrotechnischen Aktuators, der über Kontaktsensoren angesteuert wird. Die Kontaktsensoren ermitteln einen Kontakt einer Fahrzeugfront mit einem Hindernis und lösen den Aktuator aus. Eine Druckerhöhung durch das Zünden des pyrotechnischen Aktuators führt zu einem Anheben der Fronthaube, die in dem angehobenen Zustand dann mechanisch blockiert wird.

Ein Auslösen einer derartigen aktiven Fronthaube ist mit erheblichen Folgekosten verbunden, weil zumindest die pyrotechnischen Aktuatoren im Rahmen einer Reparatur ausgetauscht werden müssen. Weiterhin ist eine derartige aktive Fronthaube üblicherweise nicht einfach und werkzeuglos rückstellbar, was verhindern kann, dass ein Kraftfahrzeug, bei dem eine solche aktive Fronthaube ausgelöst wurde, das ansonsten jedoch noch fahrtauglich ist, zur Reparatur gefahren werden kann, weil die angehobene Fronthaube die Sicht des Fahrers zu weitgehend einschränkt. Zudem kann auch eine nicht mehr ausreichend sichere Befestigung der ausgelösten Fronthaube an der Karosserie gegeben sein. Ein solches Kraftfahrzeug muss demnach zur Reparatur transportiert werden, was mit einem erheblichen Aufwand und entsprechenden zusätzlichen Kosten verbunden ist.

Es wurden daher sogenannte reversible aktive Fronthaube entwickelt, bei denen ein Zurückstellen einer angehobenen Fronthaube relativ einfach und insbesondere auch werkzeuglos möglich ist.

Die WO 2005/051730 A1 offenbart eine solche reversible aktive Fronthaube eines Kraftfahrzeugs, bei der ein Öffnen oder Schließen einer beliebigen Fahrzeughaube, insbesondere der Fronthaube selbst, oder einer Fahrzeugtür dazu genutzt wird, um eine entlastete Feder, mittels der das Aufstellen bewirkt wurde, wieder vorzuspannen. Die Feder ist dabei in ein Schloss der Fronthaube, das an der Vorderseite der Fronthaube angeordnet ist, integriert. Damit ist die Feder von dem Hebesystem, über das das Aufstellen der Fronthaube geführt wird und das an einer Rückseite der Fronthaube angeordnet ist, beabstandet positioniert, wobei eine Übertragung der Federkraft auf das Hebesystem mittels eines Bowdenzugs erfolgt.

Die DE 10 2007 060 865 A1 offenbart ebenfalls eine reversible aktive Fronthaube eines Kraftfahrzeugs, bei der die Gewichtskraft der Fronthaube genutzt wird, um ein Zurückstellen der Fronthaube zu unterstützen, indem die Fronthaube nach dem Aufstellen geöffnet wird.

Die WO 01/23225 A1 offenbart ein Auslösen einer aktiven Fronthaube basierend auf dem Signal eines Pre-Crash-Sensors. Die Fronthaube ist dabei aktiv reversibel ausgestaltet, so dass diese mittels eines Aktuators von der Kollisionsstellung in die Normalstellung zurückbewegt werden kann.

Die DE 103 19 366 A1 offenbart ein Scharnier für eine aktive Fronthaube, bei dem ein Federspeicher für ein Aufstellen der Fronthaube sorgt.

Der Erfindung liegt die Aufgabe zugrunde, ein verbessertes System einer aktiven Karosseriehaube anzugeben.

Diese Aufgabe ist bei einem Hebesystem gemäß dem Patentanspruch 1 gelöst. Ein Kraftfahrzeug mit einem solchen Hebesystem ist Gegenstand des Patentanspruchs 12. Vorteilhafte Ausgestaltungsformen des Hebesystems und des Kraftfahrzeugs sind Gegenstände der weiteren Patentansprüche und ergeben sich aus der nachfolgenden Beschreibung der Erfindung.

Ein erfindungsgemäßes Hebesystem ist zum Bewegen einer Karosseriehaube eines Kraftfahrzeugs von einer Normalstellung in eine Kollisionsstellung vorgesehen. Hierzu umfasst das Hebesystem ein Hebegelenk, das einen zur Verbindung mit der Karosseriehaube eingerichteten Haubenteil und einen zur Verbindung mit einem anderen Abschnitt (d.h. nicht die Karosseriehaube) einer Karosserie des Kraftfahrzeugs verbundenen Karosserieteil umfasst, wobei der Haubenteil und der Karosserieabschnitt über ein Gelenksystem beweglich miteinander verbunden sind. Der andere Abschnitt der Karossiere kann insbesondere ein statischer Abschnitt der Karossiere sein, der somit nicht ein beweglicher Abschnitt und insbesondere nicht ein Abschnitt einer Karosseriehaube, einer Tür oder einer Klappe der Karossiere ist. Das Hebegelenk umfasst zudem mindestens ein vorgespanntes Federelement zum Bewegen des Haubenteils von der Normalstellung in die Kollisionsstellung, weil dadurch konstruktiv einfach und damit kostengünstig eine entsprechende Bewegung der Karosseriehaube bewirkt werden kann und diese Bewegung zudem durch ein erneutes Vorspannen des zuvor entlasteten Federelements vorteilhaft reversibel ist.

Das Hebesystem umfasst weiterhin einen Auslöseaktuator zum Bewegen der Karosseriehaube von der Normalstellung in die Kollisionsstellung oder zum Lösen eines Verriegelungssystems, das die Karosseriehaube in der Normalstellung verriegelt. Gemäß der ersten dieser Ausgestaltungsformen wird die Bewegung der Karosseriehaube von der Normalstellung in die Kollisionsstellung durch den Auslöseaktuator selbst bewirkt, während bei der zweiten dieser Ausgestaltungsformen die Karosseriehaube für eine solche Bewegung mittels des Auslöseaktuators lediglich entriegelt, die Bewegung selbst jedoch mittels einer anderen Komponente, vorzugsweise mittels mindestens eines vorgespannten Federelements, bewirkt wird.

Das Hebesystem umfasst zudem einen Rückstellaktuator zum Bewegen der Karosseriehaube von der Kollisionsstellung in die Normalstellung. Demnach ist das Hebesystem dazu eingerichtet ist, die Karosseriehaube automatisch von der Kollisionsstellung in die Normalstellung zurückzubewegen. Dadurch kann vermieden werden, dass eine Person, beispielsweise der Fahrer des Kraftfahrzeugs, die Karosseriehaube manuell zurückstellen muss, was mit einem erheblichen zeitlichen und/oder körperlichen Aufwand verbunden sein kann.

Erfindungsgemäß ist vorgesehen, dass der Auslöseaktuator und/oder der Rückstellaktuator indirekt auf das Hebegelenk wirkt. Eine solche indirekte Einwirkung, bei der eine von dem Auslöseaktuator und/oder dem Rückstellaktuator erzeugte Bewegung indirekt, d.h. über eine zusätzliche Übertragungseinrichtung, auf das Hebegelenk übertragen wird, ermöglicht eine vorteilhafte Anordnung des Auslöseaktuators und/oder des Rückstellaktuators in einer mittels der Übertragungseinrichtung überbrückten Distanz zu dem Hebegelenk. Dies kann sich insbesondere vorteilhaft hinsichtlich der Integration des Hebesystems in das Kraftfahrzeug auswirken, weil der zur Verfügung stehende Bauraum in dem Bereich des Kraftfahrzeugs, in dem das Hebegelenk sinnvoll angeordnet werden kann, üblicherweise sehr begrenzt ist. Die Möglichkeit einer davon entfernten Positionierung des Auslöseaktuators und/oder des Rückstellaktuators kann diese Bauraumproblematik daher entschärfen.

Die Erfindung betrifft auch ein Kraftfahrzeug mit einem erfindungsgemäßen Hebesystem und mit einer Karosserie, die die Karosseriehaube, insbesondere eine Fronthaube, umfasst, wobei der Haubenteil des Hebesystems mit der Karosseriehaube und der Karosserieteil mit dem anderen Abschnitt der Karosserie verbunden ist.

Eine indirekte Einwirkung des Auslöseaktuators und/oder des Rückstellaktuators auf das Hebegelenk kann vorzugsweise über (jeweils) einen Bowdenzug bewirkt werden, womit insbesondere eine konstruktiv einfache und damit kostengünstige Umsetzung realisiert werden kann. Alternative Ausgestaltungen dazu, beispielsweise über eine Hydraulikleitung oder ein Gestänge, können ebenfalls vorteilhaft umsetzbar sein.

Gemäß einer bevorzugten Ausgestaltung eines erfindungsgemäßen Hebesystems kann vorgesehen sein, dass der Rückstellaktuator über den Bowdenzug direkt auf den Haubenteil wirkt, wodurch eine konstruktive besonders einfache und damit kostengünstige Ausgestaltung insbesondere des Hebegelenks realisiert werden kann.

Gemäß einer weiteren vorteilhaften Ausgestaltung eines erfindungsgemäßen Hebesystems kann vorgesehen sein, dass das Hebegelenk einen mit dem Karosserieteil oder dem anderen Abschnitt der Karosserie verbundenen, mittels des Rückstellaktuators schwenkbaren Rückstellhaken aufweist, der zumindest in einen (formschlüssig Kräfte übertragenden, direkten oder indirekten) Eingriff mit einem Rückstellelement des Haubenteils bringbar ist. Dabei kann der Rückstellhaken insbesondere indirekt, besonders bevorzugt, über einen Bowdenzug mittels des Rückstellaktuators schwenkbar sein. Dadurch können die durch den Rückstellaktuator für ein Zurückbewegen der Karosseriehaube von der Kollisionsstellung in die Normalstellung aufzubringenden Kräfte relativ gering gehalten werden, was sich entsprechend vorteilhaft hinsichtlich der Herstellungskosten für den Rückstellaktuator auswirken kann.

Gemäß einer bevorzugten Weiterbildung eines solchen erfindungsgemäßen Hebesystems kann vorgesehen sein, dass der Rückstellhaken in der Normalstellung der Karosseriehaube so weit aus einem Eingriff mit dem Rückstellelement bringbar ist, dass die Karosseriehaube ohne Kollision zwischen dem Rückstellhaken und dem Rückstellelement geöffnet werden kann.

Bei der Karosseriehaube kann es sich insbesondere um eine Fronthaube des Kraftfahrzeugs handeln, die bezüglich einer Vorwärts- beziehungsweise Hauptfahrtrichtung des Kraftfahrzeugs vor einer Fahrgastzelle, in der sich zumindest ein Fahrer beim Führen des Kraftfahrzeugs aufhält, angeordnet ist. Die Normalstellung ist vorzugsweise diejenige Stellung, die die Karosseriehaube in einer zumindest teilweise geschlossenen und verriegelten Stellung aufweist. Das Bewegen der Karosseriehaube von der Normalstellung in die Kollisionsstellung kann insbesondere ein Anheben der Karosseriehaube beziehungsweise ein Bewegen zumindest auch in der Hochrichtung des Kraftfahrzeugs umfassen. Die Hochrichtung stellt dabei die Ausrichtung derjenigen Achse dar, die vertikal durch den Schwerpunkt des horizontal ausgerichteten beziehungsweise auf einem horizontalen Untergrund stehenden Kraftfahrzeugs verläuft.

Eine Betätigung des Hebesystems ist mittels eines Kollisionsermittlungssystems auslösbar. Das Kollisionsermittlungssystem ist dann vorzugsweise dazu eingerichtet, eine mögliche Kollision mit einem Hindernis prädiktiv, d.h. noch vor einer tatsächlichen Kollision, zu ermitteln und für den Fall, dass eine Kollision mit einer definierten Mindestwahrscheinlichkeit ermittelt wurde, das Hebesystem auszulösen und dadurch die Bewegung der Karosseriehaube von der Normalstellung in die Kollisionsstellung zu bewirken. Ein solches prädiktives Auslösen des Hebesystems kann insbesondere ermöglichen, das Hebesystem konstruktiv relativ einfach und damit kostengünstig auszugestalten, weil für das Auslösen und das Bewegen der Karosseriehaube in die Kollisionsstellung eine relativ lange Zeitspanne bis zu einem möglichen Auftreffen eines Hindernisses, insbesondere eines Lebewesens, auf die Karosseriehaube zur Verfügung steht.

Weiterhin kann das Kollisionsermittlungssystem vorteilhafterweise dazu eingerichtet sein, bei der Ermittlung einer möglichen Kollision mit dem Hindernis ein automatisches Bremsen des Kraftfahrzeugs (durch ein automatisches Betätigen einer Bremseinrichtung des Kraftfahrzeugs), insbesondere mit maximaler Bremswirkung, und/oder ein automatisches Lenken des Kraftfahrzeugs (durch ein automatisches Betätigen einer Lenkeinrichtung des Kraftfahrzeugs), insbesondere mit dem Ziel, dem Hindernis auszuweichen, auszulösen. Dadurch soll eine tatsächliche Kollision mit dem Hindernis möglichst vermieden werden.

Das automatische Zurückbewegen der Karosseriehaube von der Kollisionsstellung in die Normalstellung, die das erfindungsgemäße Hebesystem ermöglicht, kann insbesondere bei einem solchen Kraftfahrzeug, das eine Betätigung des Hebesystems basierend auf einer prädiktiven Ermittlung einer möglichen Kollision mit einem Hindernis auslöst, vorteilhaft sein, weil ein solches prädiktives Auslösen zu relativ häufigen Auslösungen führen kann, die sich rückschauend als nicht erforderlich zeigen, weil eine Kollision mit dem Hindernis doch nicht stattgefunden hat, beispielsweise weil eine vorzugsweise von dem Kollisionsermittlungssystem ausgelöste Notbremsung oder Ausweichlenkung des Kraftfahrzeugs eine solche verhindert hat. Die in der Kollisionsstellung befindliche Karosseriehaube kann dann automatisch zurückgestellt und ein Betrieb des Kraftfahrzeugs uneingeschränkt fortgesetzt werden.

Vorzugsweise kann vorgesehen sein, dass das Kollisionsermittlungssystem mindestens einen kontaktlos arbeitenden Ortungssensor, insbesondere einen Radarsensor und/oder einen Schallsensor, insbesondere einen Ultraschallsensor, und/oder eine Kamera umfasst. Mittels eines solchen Ortungssensors und/oder der Kamera sowie einem damit verbundenen Steuerungsgerät kann insbesondere softwarebasiert ein Abstand zu einem Hindernis, die relative Ausrichtung des Hindernisses zu dem Kraftfahrzeug sowie eine Differenzgeschwindigkeit zwischen dem Hindernis und dem Kraftfahrzeug ermittelt und darauf basierend die Wahrscheinlichkeit einer Kollision des Kraftfahrzeugs mit dem Hindernis ermittelt beziehungsweise berechnet werden.

Vorzugsweise kann vorgesehen sein, dass das Kollisionsermittlungssystem weiterhin dazu eingerichtet ist, ein Hindernis, für das eine Kollision mit einer definierten Mindestwahrscheinlichkeit ermittelt wurde, hinsichtlich der Art des Hindernisses auszuwerten, so dass insbesondere vorgesehen sein kann, dass das Hebesystem nur dann ausgelöst wird, wenn das Hindernis als (für ein Auslösen des Hebesystems) relevantes Hindernis, insbesondere als Lebewesen, insbesondere als menschliches Lebewesen (d.h. als Person), ermittelt wird. Ein unnötiges Auslösen der aktiven Karosseriehaube kann dadurch vermieden werden. Dies kann beispielsweise dann der Fall sein, wenn das Kollisionsermittlungssystem eine potentielle Kollision mit einem anderen Kraftfahrzeug ermittelt. Ein Auslösen der aktiven Karosseriehaube würde die Folgen einer solchen Kollision üblicherweise nicht mindern, den Reparaturaufwand nach einer solchen Kollision gegebenenfalls jedoch erhöhen.

Ein Hindernis, das kein Lebewesen ist, kann aber ebenfalls ein relevantes Hindernis sein. Dies gilt insbesondere für ein solches Hindernis, bei dem die Gefahr besteht, dass dieses eine Scheibe des Kraftfahrzeugs durchschlägt und dadurch eine erhebliche Gefahr für Insassen des Kraftfahrzeugs darstellt. Ein Auslösen des Hebesystems und damit ein Bewegen der Karosserie in die Kollisionsstellung kann dazu beitragen, ein solches Hindernis abzulenken und damit ein Auftreffen auf die oder zumindest ein Durschlagen der Scheibe zu vermeiden.

Gemäß einer besonders bevorzugten Ausgestaltungsform eines erfindungsgemäßen Hebesystems umfasst dieses einen (einzelnen) Aktuator, der sowohl als Auslöseaktuator als auch als Rückstellaktuator vorgesehen und entsprechend eingerichtet ist. Dadurch können die Herstellungskosten für das Hebesystem sowie der für dessen Integration in ein Kraftfahrzeug erforderliche Bauraum relativ gering gehalten werden.

Vorzugsweise kann vorgesehen sein, dass der Auslöseaktuator und/oder der Rückstellaktuator elektromotorisch ausgestaltet sind und demnach deren Funktion auf dem Betrieb eines Elektromotors beruht, der ein elektrisches Signal einer Steuerungsvorrichtung des Hebesystems in eine mechanische Bewegung, die mittels des entsprechenden Aktuators bewirkt wird, umsetzt. Alternative Ausgestaltung des Auslöseaktuators und/oder des Rückstellaktuators, beispielsweise elektromagnetisch, hydraulisch oder pneumatisch, sind ebenfalls vorteilhaft umsetzbar.

Vorzugsweise kann vorgesehen sein, dass das Federelement des Hebegelenks eine Spiral- oder Schenkelfeder ist oder umfasst. Besonders bevorzugt sind bei mehreren Federelementen des Hebegelenks, die für ein Bewegen der Karosseriehaube von der Normalstellung in die Kollisionsstellung vorgesehen sind, sämtliche dieser Federelemente als Spiral- und/oder Schenkelfedern ausgestaltet. Eine Spiral- oder Schenkelfeder lässt sich vorteilhaft, insbesondere hinsichtlich des erforderlichen Bauraums, in das Hebesystem integrieren.

Gemäß einer vorteilhaften Weiterbildung des Hebegelenks eines erfindungsgemäßen Hebesystems kann vorgesehen sein, dass das Gelenksystem einen Zwischenteil umfasst, wobei der Karosserieteil und der Zwischenteil als Scharnier ausgebildet sind. Dadurch kann das Hebegelenk in vorteilhafter Weise auch als Scharnier genutzt werden, das ein Öffnen der Karosseriehaube für ein Freigeben eines darunter befindlichen Karosserieraums, beispielsweise eines zur Aufnahme von Antriebskomponenten des Kraftfahrzeugs dienenden Motorraums oder eines zur Aufnahme von Gepäck dienenden Gepäckraums, ermöglicht.

Bei einer Ausgestaltung eines solchen erfindungsgemäßen Hebesystems, bei der zudem der Rückstellaktuator indirekt über einen Bowdenzug auf das Hebegelenk wirkt, kann vorzugsweise vorgesehen sein, dass eine Hülle des Bowdenzugs an das Zwischenteil angebunden ist. Dadurch kann verhindert werden, dass der Bowdenzug ein Öffnen der Karosseriehaube behindert.

Gemäß einer bevorzugten Ausgestaltungsform eines erfindungsgemäßen Hebesystems kann vorgesehen sein, dass das Hebegelenk zwei Koppelteile umfasst, die zusammen mit dem Haubenteil einerseits und dem Karosserieteil oder dem Zwischenteil andererseits ein Gelenkviereck bilden. Dadurch kann eine vorteilhafte Kinematik der aktiven Karosseriehaube erreicht werden. Insbesondere kann damit eine grundsätzlich vorteilhafte Ausgestaltung des erfindungsgemäßen Kraftfahrzeugs realisiert werden, die dadurch gekennzeichnet ist, dass die Karosseriehaube bei einer Bewegung von der Normalstellung in die Kollisionsstellung auch in Richtung des Schwerpunkts des Kraftfahrzeugs bewegt wird. Bei der bevorzugten Ausgestaltung der Karosseriehaube als Fronthaube kann dadurch insbesondere ein Verschieben der Karosseriehaube in Richtung einer Frontscheibe des Kraftfahrzeugs erreicht werden, so dass dann ein Aufprall einer Person und insbesondere eines Kopfs dieser Person auf die Frontscheibe durch die in der Kollisionsstellung befindliche Fronthaube vermieden werden kann. Dadurch kann eine besonders gute Schutzfunktion der aktiven Karosseriehaube eines erfindungsgemäßen Kraftfahrzeugs realisiert werden.

Die mindestens eine Spiral- oder Schenkelfeder, die das Hebegelenk eines erfindungsgemäßen Kraftfahrzeugs vorzugsweise umfasst, um die Karosseriehaube aus der Normalstellung in die Kollisionsstellung zu bewegen, kann weiterhin bevorzugt in ein Drehlager des Gelenkvierecks des Hebegelenks integriert sein. Dies stellt eine funktional und hinsichtlich des erforderlichen Bauraums vorteilhafte Integration des Federelements dar. Besonders bevorzugt kann vorgesehen sein, dass in jedes der Drehlager des Gelenkvierecks eine Spiral- oder Schenkelfeder integriert ist, wodurch auch mit relativ klein dimensionierten Schenkelfedern eine ausreichende Gesamtfederkraft zum Bewegen und auch Halten der Karosseriehaube in der Kollisionsstellung bereitgestellt werden kann.

Bei einem erfindungsgemäßen Kraftfahrzeug kann es sich vorzugsweise um ein radbasiertes und nicht schienengebundenes Kraftfahrzeug (vorzugsweise ein PKW oder ein LKW) handeln.

Die Erfindung wird nachfolgend anhand von in den Zeichnungen dargestellten Ausgestaltungsbeispielen näher erläutert. In den Zeichnungen zeigt, teilweise in vereinfachter Darstellung:
- Fig. 1 bis 3:: verschiedene Zeitpunkte im Rahmen einer Kollision eines erfindungsgemäßen Kraftfahrzeugs mit einem Personen-Dummy;
- Fig. 4:: eine erste Seitenansicht zu einer ersten Ausgestaltungsform eines erfindungsgemäßen Hebesystems in einer Normalstellung;
- Fig. 5:: das Hebesystem gemäß der Fig. 4 nach einem Verstellen aus der Normalstellung in eine Kollisionsstellung;
- Fig. 6:: das Hebesystem gemäß der Fig. 5 in einer zweiten Seitenansicht;
- Fig. 7:: das Hebesystem gemäß der Fig. 6 nach einem Zurückstellen aus der Kollisionsstellung in die Normalstellung;
- Fig. 8:: eine erste Seitenansicht zu einer zweiten Ausgestaltungsform eines erfindungsgemäßen Hebesystems in einer Normalstellung;
- Fig. 9:: das Hebesystem gemäß der Fig. 8 nach einem Verstellen aus der Normalstellung in eine Kollisionsstellung;
- Fig. 10:: das Hebesystem gemäß der Fig. 9 in einer zweiten Seitenansicht;
- Fig. 11:: das Hebesystem gemäß der Fig. 10 nach einem Zurückstellen aus der Kollisionsstellung in die Normalstellung;
- Fig. 12:: eine erste Seitenansicht zu einer dritten Ausgestaltungsform eines erfindungsgemäßen Hebesystems in einer Normalstellung;
- Fig. 13:: das Hebesystem gemäß der Fig. 12 nach einem Verstellen aus der Normalstellung in eine Kollisionsstellung;
- Fig. 14:: das Hebesystem gemäß der Fig. 13 in einer zweiten Seitenansicht;
- Fig. 15:: das Hebesystem gemäß der Fig. 14 nach einem Zurückstellen aus der Kollisionsstellung in die Normalstellung;
- Fig. 16:: eine erste Seitenansicht zu einer vierten Ausgestaltungsform eines erfindungsgemäßen Hebesystems in einer Normalstellung;
- Fig. 17:: das Hebesystem gemäß der Fig. 16 nach einem Verstellen aus der Normalstellung in eine Kollisionsstellung;
- Fig. 18:: das Hebesystem gemäß der Fig. 17 in einer zweiten Seitenansicht;
- Fig. 19:: das Hebesystem gemäß der Fig. 18 nach einem Zurückstellen aus der Kollisionsstellung in die Normalstellung;
- Fig. 20:: eine erste Seitenansicht zu einer fünften Ausgestaltungsform eines erfindungsgemäßen Hebesystems in einer Normalstellung;
- Fig. 21:: das Hebesystem gemäß der Fig. 20 nach einem Verstellen aus der Normalstellung in eine Kollisionsstellung;
- Fig. 22:: das Hebesystem gemäß der Fig. 21 in einer zweiten Seitenansicht und
- Fig. 23:: das Hebesystem gemäß der Fig. 22 nach einem Zurückstellen aus der Kollisionsstellung in die Normalstellung.

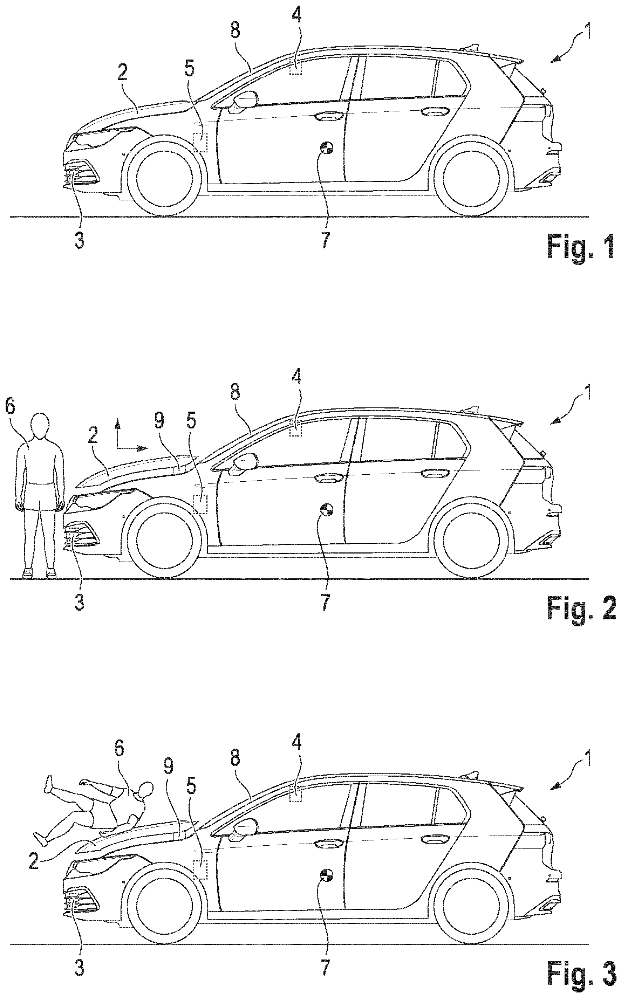

Die Fig. 1 bis 3 zeigen ein erfindungsgemäßes Kraftfahrzeug 1, das eine (aktive) Fronthaube 2 sowie ein Kollisionsermittlungssystem zum Auslösen einer Betätigung eines der Fronthaube 2 zugeordneten Hebesystems umfasst. Das Kollisionsermittlungssystem umfasst mindestens einen kontaktlos arbeitenden Ortungssensor 3, insbesondere einen Radarsensor und/oder einen Ultraschallsensor, sowie eine Kamera 4, die den Bereich vor dem Kraftfahrzeug 1 überwachen, wobei basierend auf Signalen des mindestens einen Ortungssensors 3 und der Kamera 4 von einer Steuerungsvorrichtung 5 des Kraftfahrzeugs 1 eine mögliche Anwesenheit eines Hindernisses 6 vor dem Kraftfahrzeug 1 und basierend auf der räumlichen Ausrichtung, dem Abstand sowie der Differenzgeschwindigkeit zwischen dem Hindernis 6 und dem Kraftfahrzeug 1 die Wahrscheinlichkeit einer Kollision des Kraftfahrzeugs 1 mit dem Hindernis 6 ermittelt wird. Das Kollisionsermittlungssystem, insbesondere eine in der Steuerungsvorrichtung 5 gespeicherte Software, ist derart ausgestaltet, dass diese nicht nur die Anwesenheit des Hindernisses 6 ermitteln kann, sondern auch, ob es sich bei dem Hindernis 6 um eine Person 6 handelt.

Wird von der Steuerungsvorrichtung 5 eine mögliche Kollision mit einem Hindernis 6 ermittelt, wird zumindest eine automatische Bremsung des Kraftfahrzeugs 1, insbesondere mit maximal möglicher Bremswirkung, eingeleitet. Wurde das Hindernis 6 zudem als Person identifiziert und eine definierte Mindestwahrscheinlichkeit für eine Kollision mit der Person ermittelt, wird noch vor dieser (möglichen) Kollision und damit prädiktiv eine Betätigung des Hebesystems, das der Fronthaube 2 zugeordnet ist, ausgelöst. Dadurch wird die Fronthaube 2 von einer Normalstellung gemäß der Fig. 1 in eine Kollisionsstellung gemäß den Fig. 2 und 3 bewegt, wobei sich die Fronthaube 2 sowohl entlang der Hochrichtung als auch, rückwärts gerichtet, entlang der Längsrichtung des Kraftfahrzeugs 1 und damit in Richtung des Schwerpunkts 7 des Kraftfahrzeugs 1 bewegt. Durch den Bewegungsanteil entlang der Hochrichtung erhöht sich der Abstand zwischen der Fronthaube 2 und Komponenten des Kraftfahrzeugs 1, die unterhalb der Fronthaube 2 gelegen sind (beispielsweise ein Verbrennungsmotor), wodurch sich die Fronthaube 2 bei der tatsächlich stattfindenden Kollision relativ weitgehend deformieren kann, ohne dass eine solche Deformation durch diese darunterliegenden Komponenten des Kraftfahrzeugs 1 begrenzt würde. Zudem kann durch die in der Kollisionsstellung befindliche Fronthaube 2 gegebenenfalls auch ein Auftreffen der Person und insbesondere eines Kopfes der Person auf eine Frontscheibe 8 des Kraftfahrzeugs 1, die bezüglich der Längsrichtung des Kraftfahrzeugs 1 hinter der Fronthaube 2 angeordnet ist, vermieden werden. Dies ist auch in der Bewegung der Fronthaube 2 in Richtung des Schwerpunkts 7 des Kraftfahrzeugs 1 begründet, wodurch die Fronthaube 2 in der Kollisionsstellung die Frontscheibe 8 in einem relativ weitgehenden Maße überdeckt. Ein Auftreffen der Person auf die Frontscheibe 8 könnte aufgrund der Splitterwirkung der dabei zerstörten Frontscheibe 8 und der nur geringfügigen Deformierbarkeit der Frontscheibe 8 zu relativ schweren Verletzungen nicht nur der darauf auftreffenden Person, sondern auch von Insassen des Kraftfahrzeugs (1) führen.

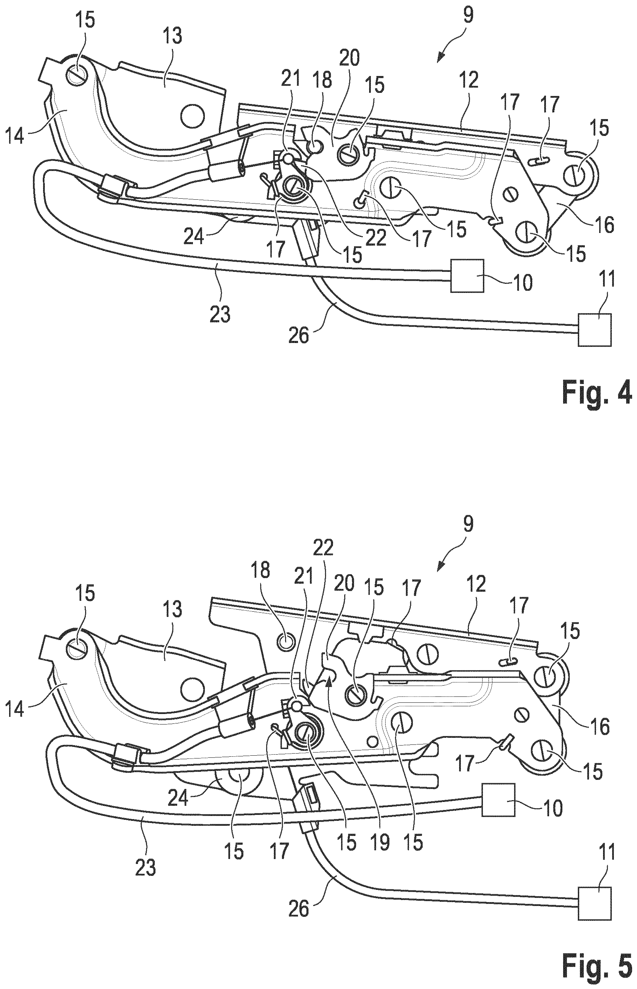

Die Fig. 4 bis 7 zeigen eine erste Ausgestaltungsform eines erfindungsgemäßen Hebesystems, beispielsweise für ein Kraftfahrzeug (1) gemäß den Fig. 1 bis 3, in verschiedenen Funktionsstellungen und Ansichten.

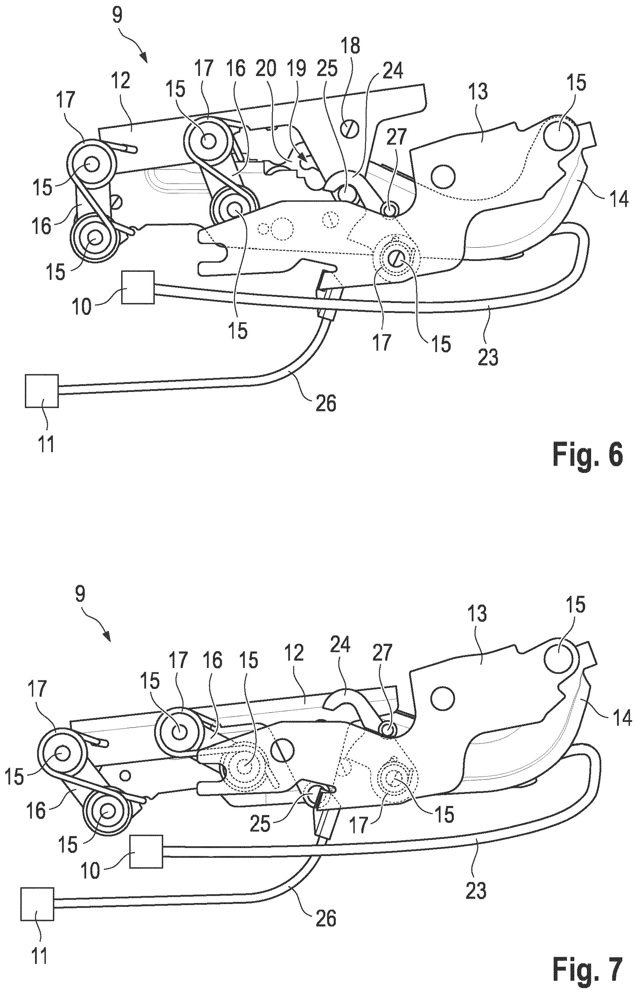

Das Hebesystem umfasst ein Hebegelenk 9, mittels dessen eine Bewegung einer Karosseriehaube 2, beispielsweise einer Fronthaube 2 eines Kraftfahrzeugs 1 gemäß den Fig. 1 bis 3, zwischen einer Normalstellung (vgl. Fig. 4 und 7) und einer Kollisionsstellung (vgl. Fig. 5 und 6) bewirkt und geführt werden kann. Das Hebesystem umfasst weiterhin einen Auslöseaktuator 10 und einen Rückstellaktuator 11. Mittels des Auslöseaktuators 10 kann ein Verriegelungssystem, das das Hebegelenk 9 und damit auch die Karosseriehaube 2 in der Normalstellung verriegelt, gelöst werden. Mittels des Rückstellaktuators 11 kann das Hebegelenk 9 und damit auch die Karosseriehaube 2 von der Kollisionsstellung in die Normalstellung zurückbewegt werden.

Das Hebegelenk 9 umfasst einen Haubenteil 12, der zur festen beziehungsweise unbeweglichen Verbindung mit der Karosseriehaube 2 vorgesehen und entsprechend eingerichtet ist, sowie einen zur Verbindung mit einem statischen Abschnitt einer Karosserie des Kraftfahrzeugs 1 vorgesehenen und dazu entsprechend eingerichteten Karosserieteil 13, wobei der Haubenteil 12 und der Karosserieteil 13 über ein Gelenksystem beweglich miteinander verbunden sind. Dieses Gelenksystem umfasst einen Zwischenteil 14, der in Verbindung mit dem Karosserieteil 13 ein Scharnier ausbildet, so dass diese beiden Komponenten des Hebegelenks 9 über ein Drehlager 15 miteinander verbunden und (nur) zueinander drehbar sind.

Das Gelenksystem des Hebegelenks 9 umfasst weiterhin zwei Koppelteile 16, die zusammen mit dem Haubenteil 12 und dem Zwischenteil 14 ein Gelenkviereck ausbilden. Dabei sind die Koppelteile 16 jeweils endseitig über jeweils ein Drehlager 15 mit dem Haubenteil 12 oder mit dem Zwischenteil 14 drehbar verbunden. Die Drehlager 15, die die Koppelteile 16 mit dem Haubenteil 12 verbinden, sind in der Normalstellung des Hebegelenks 9 im Vergleich zu der Kollisionsstellung bezüglich einer Hochrichtung des Hebegelenks 9 näher an den Drehlagern 15, die die Koppelteile 16 mit dem Zwischenteil 14 verbinden, sowie weiter entfernt in Richtung eines vorderen Endes des Hebegelenks 9 angeordnet. Die Hochrichtung des Hebegelenks 9 entspricht der Hochrichtung eines dieses umfassenden Kraftfahrzeugs 1 und das vordere Ende des Hebegelenks 9 ist einer Front des Kraftfahrzeugs 1 zugeordnet.

In sämtliche der Drehlager 15 des Gelenkvierecks sind Schenkelfedern 17 integriert, die derart vorgespannt sind, dass diese ein Schwenken der Koppelteile 16 derart bewirken, dass sich der Haubenteil 12 von der Normalstellung in die Kollisionsstellung bewegt. Die beiden jeweils einem der Koppelteile 16 zugeordneten Schenkelfedern 17 sind als ineinander übergehende und aus einem einzelnen Federdraht ausgebildete Doppelschenkelfeder ausgestaltet.

Zum Auslösen einer Bewegung des Haubenteils 12 von der Normalstellung in die Kollisionsstellung muss das Verriegelungssystem gelöst werden. Dieses Verriegelungssystem umfasst einen an dem Haubenteil 12 befestigten Verriegelungsbolzen 18, der in der Normalstellung des Hebegelenks 9 in eine Verriegelungsausnehmung 19 eines Verriegelungselements 20 einer Drehfalle eingreift. Dieses Verriegelungselement 20 ist mittels eines Drehlagers 15 drehbar mit dem Zwischenteil 14 verbunden. Das Verriegelungssystem umfasst weiterhin eine Sperrklinke 21, die ebenfalls mittels eines Drehlagers 15 drehbar mit dem Zwischenteil 14 verbunden ist, wobei die Sperrklinke 21 in der Normalstellung des Hebegelenks 9 einen Sperrvorsprung 22 des Verriegelungselements 20 der Drehfalle hintergreift, wodurch eine Drehung des Verriegelungselements 20 der Drehfalle, die zu einem Freigeben des Verriegelungsbolzens18 des Haubenteils 12 führen würde, verhindert ist.

An der Sperrklinke 21 greift ein Ende eines ersten Bowdenzugs 23 an, der mittels des Auslöseaktuators 10 bewegbar ist. Durch ein Betätigen des Auslöseaktuators 10 wird die Sperrklinke aus der in der Fig. 4 dargestellten Sperrstellung unter zunehmender Vorspannung einer der Sperrklinke 21 zugeordneten Schenkelfeder 17 verdreht und dadurch der Sperrvorsprung 22 des Verriegelungselements 20 der Drehfalle freigegeben. Infolge der Vorspannung der Schenkelfedern 17 des Gelenkvierecks und auch durch die Wirkung einer vorgespannten Schenkelfeder 17, die das Verriegelungselement 20 der Drehfalle in Richtung einer Rotation im Uhrzeigersinn in der Fig. 4 beaufschlagt, gibt das Verriegelungselement 20 durch eine entsprechende Drehung den Verriegelungsbolzen 18 des Haubenteils 12 frei und die vorgespannten Schenkelfedern 17 des Gelenkvierecks bewirken die Bewegung des Haubenteils 12 von der Normalstellung gemäß der Fig. 4 in die Kollisionsstellung gemäß der Fig. 5. Dabei wird das Haubenteil 12 sowohl in der Hochrichtung als auch in Richtung eines hinteren Endes des Hebegelenks 9, das einer Fahrgastzelle des Kraftfahrzeugs 1 zugewandt ist, bewegt.

In der Kollisionsstellung des Haubenteils 12 hält die dem Verriegelungselement 20 der Drehfalle zugeordnete Schenkelfeder 17 das Verriegelungselement 20 in der freigebenden Stellung, während die Sperrklinke 21 wieder entlastet wird. Die der Sperrklinke 21 zugeordnete Schenkelfeder 17 verdreht die Sperrklinke 21 dadurch wieder in die Sperrstellung, wodurch ermöglicht wird, dass die Sperrklinke 21 bei einem Zurückstellen des Hebegelenks 9 erneut mit dem Sperrvorsprung 22 des Verriegelungselements 20 der Drehfalle zusammenwirken kann.

Für ein Zurückstellen des Hebegelenks 9 umfasst dieses einen Rückstellhaken 24 (vgl. Fig. 6), der mittels eines Drehlagers 15 mit dem Karosserieteil 13 verbunden ist, wobei der Rückstellhaken 24 in der Kollisionsstellung des Hebegelenks 9 mit einem bolzenförmigen Rückstellelement 25, der mit dem Haubenteil 12 fest verbunden ist, zusammenwirkt. An dem Rückstellhaken 24 greift ein Ende eines zweiten Bowdenzugs 26 an, der mittels des Rückstellaktuators 11 betätigt werden kann, wodurch der Rückstellhaken 24 derart verschwenkt wird, dass dieser über das Rückstellelement 25 das Haubenteil 12 unter zunehmender Vorspannung der in das Gelenkviereck integrierten Schenkelfedern 17 zurück in die Normalstellung bewegt, wobei der Verriegelungsbolzen 18 des Haubenteils 12 wieder in die Verriegelungsausnehmung 19 des Verriegelungselements 20 der Drehfalle eingreift. Dabei wird das Verriegelungselement 20 zudem bei zunehmender Vorspannung der diesem zugeordneten Schenkelfeder 17 so gedreht, dass dessen Sperrvorsprung 22 wieder mit der Sperrklinke 21 zusammenwirkt, wodurch das Hebegelenk 9 dann wieder in der Normalstellung verriegelt ist (vgl. Fig. 7).

Anschließend kann die Belastung des Rückstellhakens 24 durch den Rückstellaktuator 11 gelöst werden, so dass der Rückstellhaken 24 durch die Wirkung der diesem zugeordneten Schenkelfeder 17 zurückgeschwenkt wird, bis dieser an einen Anschlagbolzen 27 anschlägt. In dieser Freigabestellung des Rückstellhakens 24 ist es möglich, die Einheit aus Haubenteil 12, Koppelteilen 16 und Zwischenteil 14 unter Verwendung des Drehlagers 15, das den Zwischenteil 14 mit dem Karosserieteil 13 verbindet, gegenüber dem Karosserieteil 13 zu schwenken, wodurch ein Öffnen der Karosseriehaube 2, die mit dem Haubenteil 12 des Hebegelenks 9 verbunden ist, möglich ist, ohne dass dies durch eine Kollision des Rückstellelements 25 mit dem Rückstellhaken 24 verhindert würde.

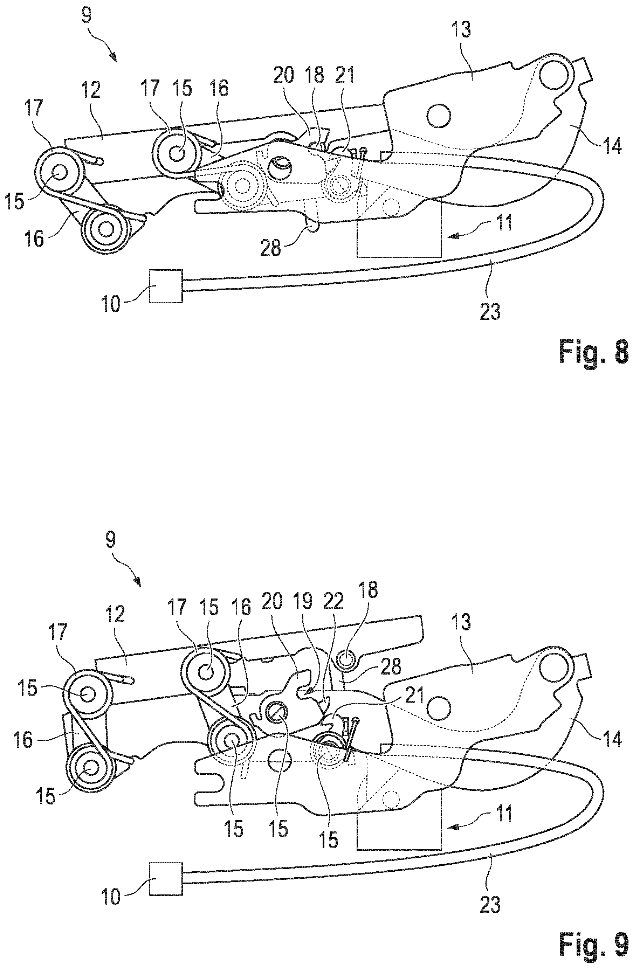

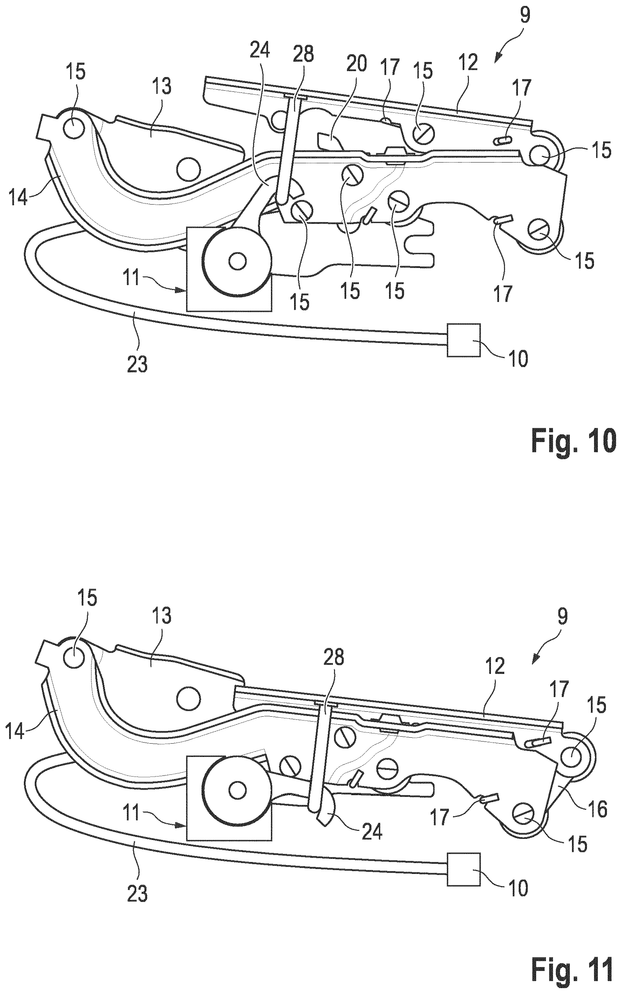

Die Fig. 8 bis 11 zeigen ein Hebesystem für ein erfindungsgemäßes Kraftfahrzeug 1 gemäß einer alternativen Ausgestaltungsform. Dieses unterscheidet sich von dem Hebesystem gemäß den Fig. 4 bis 7 im Wesentlichen dahingehend, dass für die Rückstellung ein direkt auf das Hebegelenk 9 wirkender Rückstellaktuator 11 vorgesehen ist, der mit dem Karosserieteil 13 fest verbunden ist. Der Rückstellaktuator 11 umfasst einen beispielsweise elektromotorisch schwenkbaren Rückstellhaken 24, der für ein Zurückbewegen des Haubenteils 12 des Hebegelenks 9 von der Kollisionsstellung gemäß der Fig. 10 in die Normalstellung gemäß der Fig. 11 mit einem bügelförmigen Rückstellelement 28 zusammenwirkt, das mit dem Haubenteil 12 fest verbunden ist. Nach dem Zurückbewegen des Haubenteils 12 in die Normalstellung wird der Rückstellhaken 24 wieder aus dem Eingriff mit dem Rückstellelement 28 verschwenkt, wodurch dann ein Öffnen der mit dem Haubenteil 12 verbundenen Karosseriehaube 2 des Kraftfahrzeugs 1 möglich ist.

Bei einer abgewandelten Ausgestaltungsform des Hebesystems gemäß den Fig. 8 bis 11 kann der mit dem Karosserieteil 13 verbundene Rückstellhaken 24 auch mittels eines Rückstellaktuators 11 betätigt werden, der indirekt auf das Hebegelenk 9 wirkt und der den Rückstellhaken 24 beispielsweise mittels eines zweiten Bowdenzugs 26 bewegt.

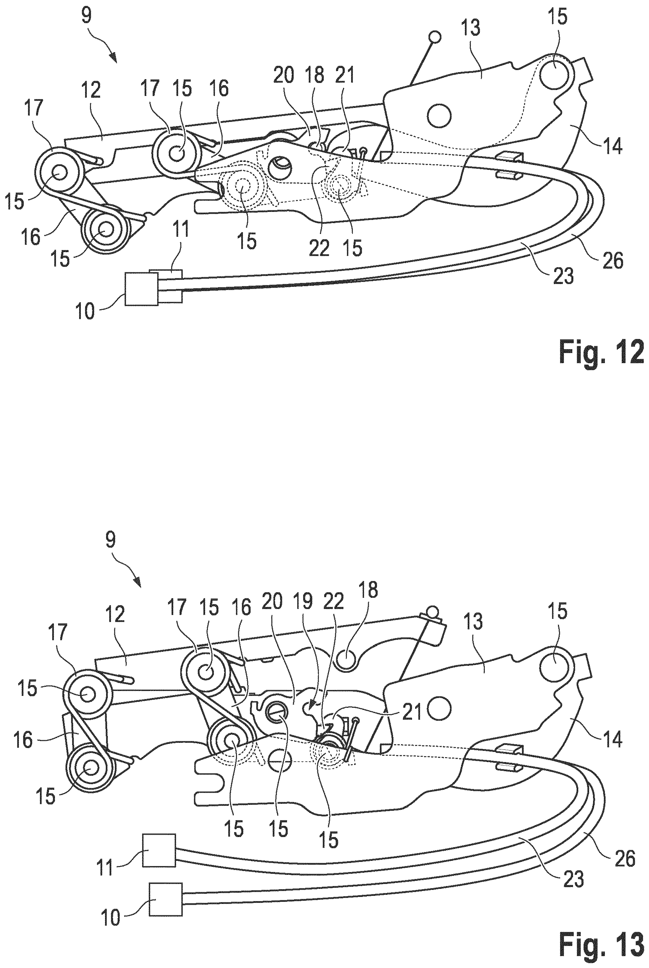

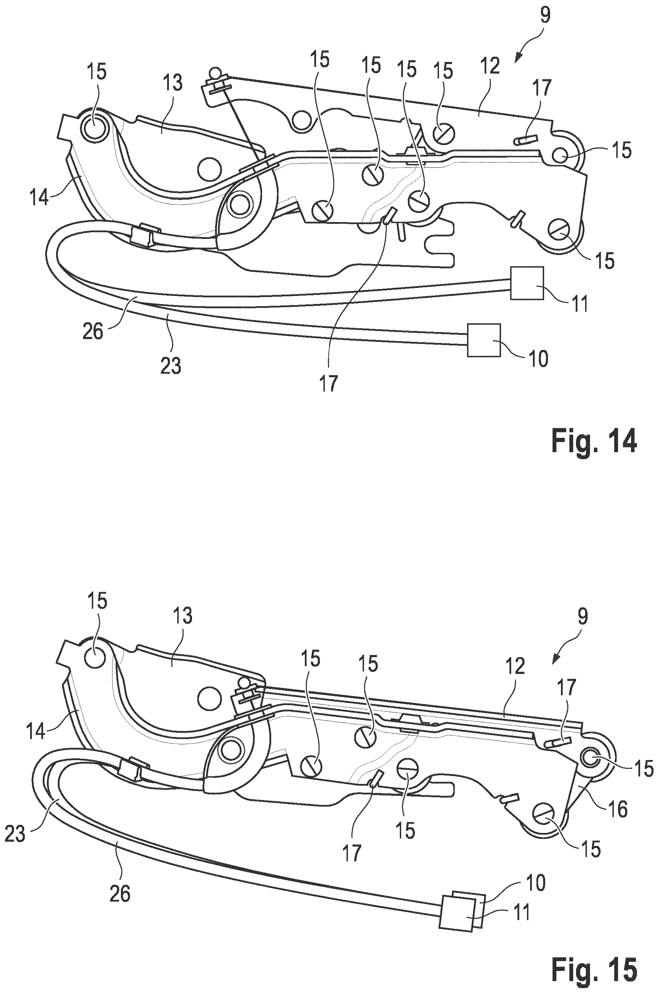

Die Fig. 12 bis 15 zeigen ein erfindungsgemäßes Hebesystem gemäß einer weiteren Ausgestaltungsform. Dieses unterscheidet sich von dem Hebesystem gemäß den Fig. 4 bis 7 im Wesentlichen dahingehend, dass das dem Hebegelenk 9 zugeordnete Ende eines (Draht-)Seils des zweiten Bowdenzugs 26 direkt an dem Haubenteil 12 angreift und folglich ein Zurückbewegen des Haubenteils 12 von der Kollisionsstellung gemäß der Fig. 14 in die Normalstellung gemäß der Fig. 15 direkt mittels des von dem Rückstellaktuator 11 betätigten Bowdenzugs 26 bewirkt wird. Das dem Hebegelenk 9 zugeordnete Ende einer Hülle des zweiten Bowdenzugs 26 ist an dem Zwischenteil 14 angebunden, wodurch der zweite Bowdenzug 26 ein Öffnen der Karosseriehaube 2 mit einem damit verbundenen Schwenken des Zwischenteils 14 gegenüber dem Karosserieteil 13 um das diese Komponenten verbindende Drehgelenk 15 nicht behindert.

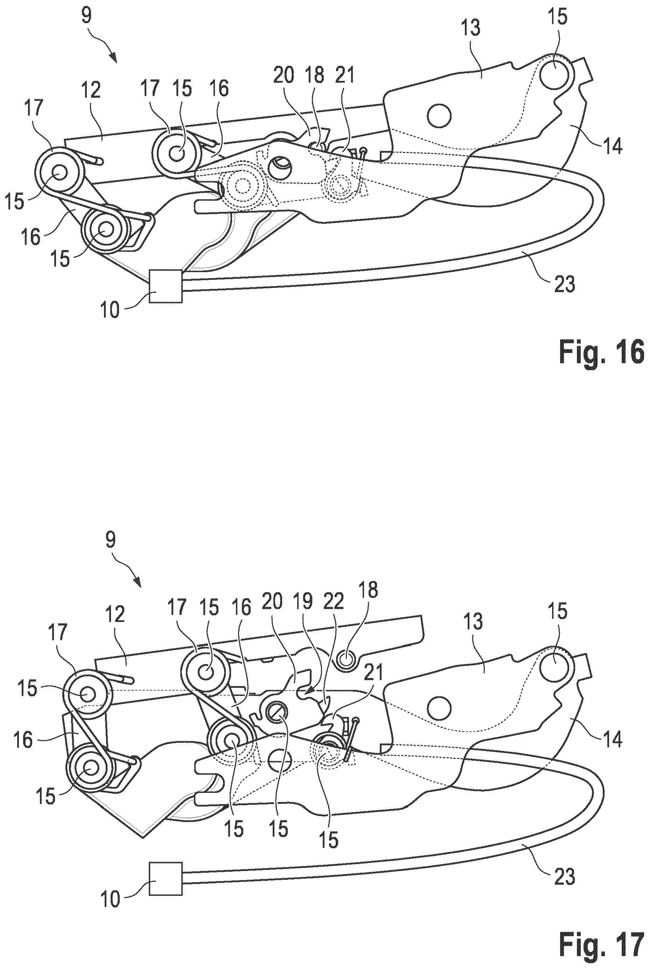

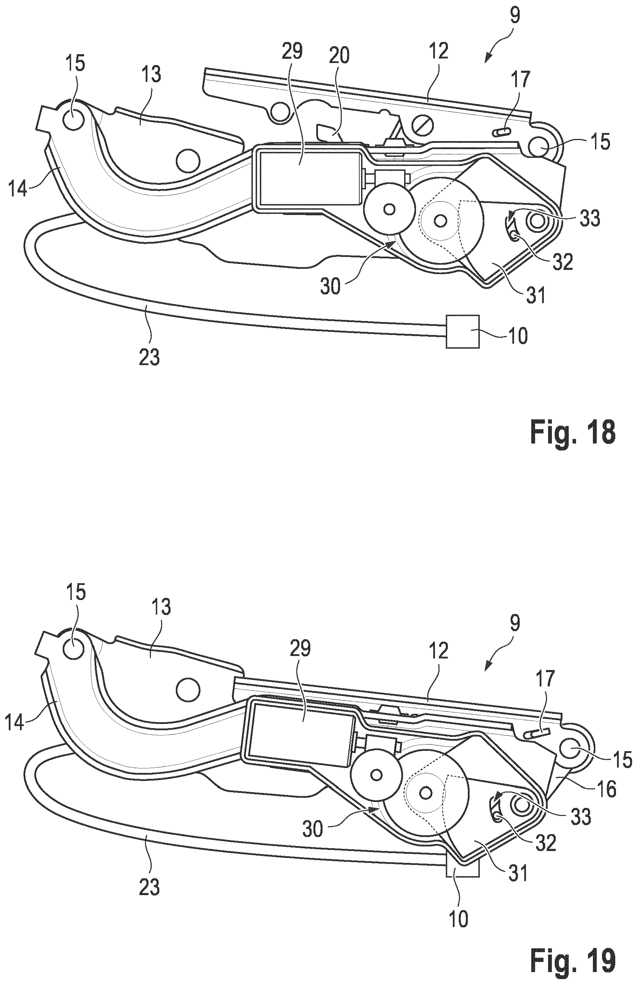

Die Fig. 16 bis 19 zeigen ein erfindungsgemäßes Hebesystem gemäß einer weiteren Ausgestaltungsform. Bei dieser Ausgestaltungsform ist ebenfalls, wie bei derjenigen gemäß den Fig. 8 bis 11, ein direkt auf das Hebegelenk 9 wirkender Rückstellaktuator 11 vorgesehen. Dieser Rückstellaktuator 11 ist mit dem Zwischenteil 14 fest verbunden und umfasst einen Elektromotor 29, der über ein Zahnradgetriebe 30 auf eine randseitig mit einer Verzahnung versehene Schwenkscheibe 31 wirkt, die mit einem der Koppelteile 16 verbunden ist. Diese Verbindung ist in Grenzen beweglich, indem ein Führungsbolzen 32 des Koppelteils 16 in einer bogenförmigen Führungsöffnung 33 der Schwenkscheibe 31 geführt ist. Die Schwenkscheibe 31 kann mittels des Elektromotors 29 zwischen einer ersten Stellung gemäß der Fig. 18 und einer zweiten Stellung gemäß der Fig. 19 verschwenkt werden. Befindet sich die Schwenkscheibe 31 in der ersten Stellung und der Haubenteil 12 des Hebegelenks 9 in der Kollisionsstellung, liegt der Führungsbolzen 32 an demjenigen Ende der Führungsöffnung 33 an, das in Richtung der ersten Stellung der Schwenkscheibe 31 weist (vgl. Fig. 18). Ein Schwenken der Schwenkscheibe 31 von der ersten Stellung in die zweite Stellung bewirkt demnach ein Mitnehmen des Führungsbolzens 32 und damit ein Schwenken des zugehörigen Koppelteils 16, wodurch der Haubenteil 12 des Hebegelenks 9 in die Normalstellung zurückbewegt wird. Anschließend kann die Schwenkscheibe 31 mittels des Elektromotors 29 wieder in die erste Stellung geschwenkt werden. Ein erneutes Auslösen des Hebegelenks 9 und damit ein federbelastetes Bewegen des Haubenteils 12 in die Kollisionsstellung wird durch die in der ersten Stellung positionierte Schwenkscheibe 31 nicht behindert, weil sich der Führungsbolzen 32 dabei frei in der Führungsöffnung 33 bewegen kann.

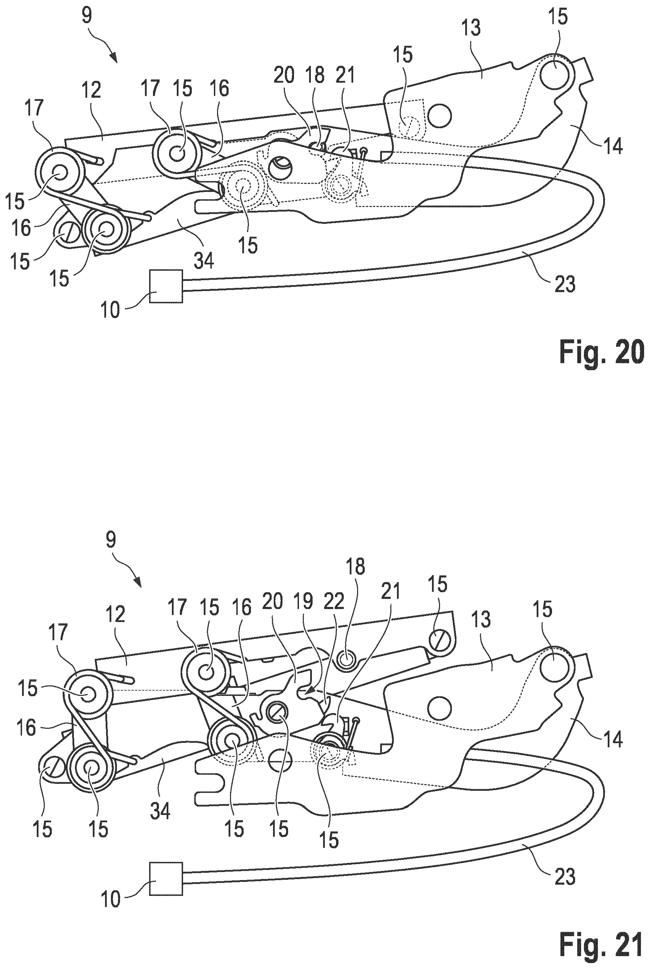

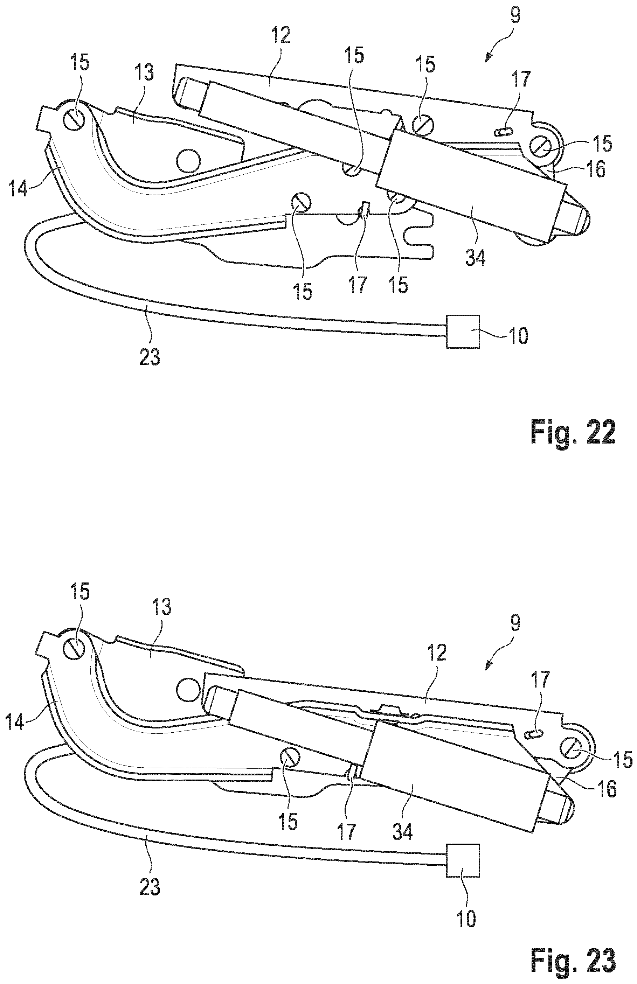

Die Fig. 20 bis 23 zeigen ein erfindungsgemäßes Hebesystem gemäß einer weiteren Ausgestaltungsform. Bei diesem ist ebenfalls, wie bei den Hebesystemen gemäß den Fig. 8 bis 11 und Fig. 16 bis 19, ein direkt auf das Hebegelenk 9 wirkender Rückstellaktuator 11 vorgesehen. Dieser ist in Form eines Linearantriebs 34 ausgebildet, der beispielsweise eine elektromotorisch antreibbare Gewindespindel umfassen kann, wobei der Linearantrieb 34 zwischen dem Haubenteil 12 und dem Zwischenteil 13 abgestützt ist.

### BEZUGSZEICHENLISTE

- 1: Kraftfahrzeug
- 2: Fronthaube / Karosseriehaube
- 3: Ortungssensor
- 4: Kamera
- 5: Steuerungsvorrichtung
- 6: Hindernis
- 7: Schwerpunkt
- 8: Frontscheibe
- 9: Hebegelenk
- 10: Auslöseaktuator
- 11: Rückstellaktuator
- 12: Haubenteil
- 13: Karosserieteil
- 14: Zwischenteil
- 15: Drehlager
- 16: Koppelteil
- 17: Schenkelfeder
- 18: Verriegelungsbolzen
- 19: Verriegelungsausnehmung
- 20: Verriegelungselement
- 21: Sperrklinke
- 22: Sperrvorsprung
- 23: erster Bowdenzug
- 24: Rückstellhaken
- 25: Rückstellelement
- 26: zweiter Bowdenzug
- 27: Anschlagbolzen
- 28: Rückstellelement
- 29: Elektromotor
- 30: Zahnradgetriebe
- 31: Schwenkscheibe
- 32: Führungsbolzen
- 33: Führungsöffnung
- 34: Linearantrieb

## Patentansprüche

1. Hebesystem zum Bewegen einer Karosseriehaube (2) eines Kraftfahrzeugs (1) von einer Normalstellung in eine Kollisionsstellung, mit
• einem Hebegelenk (9), das einen zur Verbindung mit der Karosseriehaube (2) eingerichteten Haubenteil (12) und einen zur Verbindung mit einem anderen Abschnitt einer Karosserie des Kraftfahrzeugs (1) verbundenen Karosserieteil (13), wobei der Haubenteil (12) und der Karosserieteil (13) über ein Gelenksystem beweglich miteinander verbunden sind, sowie mindestens ein vorgespanntes Federelement zum Bewegen des Haubenteils (12) von der Normalstellung in die Kollisionsstellung umfasst.
• einem Auslöseaktuator (10) zum Bewegen der Karosseriehaube (2) von der Normalstellung in die Kollisionsstellung oder zum Lösen eines Verriegelungssystems des Hebegelenks (9), das die Karosseriehaube (2) in der Normalstellung verriegelt, und
• einem Rückstellaktuator (11) zum Bewegen der Karosseriehaube (2) von der Kollisionsstellung in die Normalstellung,
**dadurch gekennzeichnet, dass** der Auslöseaktuator (10) und/oder der Rückstellaktuator (11) indirekt auf das Hebegelenk (9) wirkt.

2. Hebesystem gemäß Anspruch 1, **dadurch gekennzeichnet, dass** der Auslöseaktuator (10) und/oder der Rückstellaktuator (11) über einen Bowdenzug (23, 26) auf das Hebegelenk (9) wirkt.

3. Hebesystem gemäß Anspruch 1 oder 2, **gekennzeichnet durch** einen einzelnen Aktuator, der als Auslöseaktuator (10) und als Rückstellaktuator (11) eingerichtet ist.

4. Hebesystem gemäß einem der vorhergehenden Ansprüche, **dadurch gekennzeichnet, dass** der Auslöseaktuator (10) und/oder der Rückstellaktuator (11) elektromotorisch ausgestaltet ist.

5. Hebesystem gemäß einem der vorhergehenden Ansprüche, **dadurch gekennzeichnet, dass** das Gelenksystem (9) einen Zwischenteil (14) umfasst, wobei der Karosserieteil (13) und der Zwischenteil (14) als Scharnier ausgebildet sind.

6. Hebesystem gemäß einem der vorhergehenden Ansprüche, **dadurch gekennzeichnet, dass** das Hebegelenk (9) einen mit dem Karosserieteil (13) verbundenen, mittels des Rückstellaktuators (11) schwenkbaren Rückstellhaken (24) aufweist, der in einen Eingriff mit einem Rückstellelement (25, 28) des Haubenteils (12) bringbar ist.

7. Hebesystem gemäß Anspruch 6, **dadurch gekennzeichnet, dass** der Rückstellhaken (24) in der Normalstellung der Karosseriehaube (2) so weit aus einem Eingriff mit dem Rückstellelement (25, 28) bringbar ist, dass die Karosseriehaube (2) ohne Kollision zwischen dem Rückstellhaken (24) und dem Rückstellelement (25, 28) geöffnet werden kann.

8. Hebesystem gemäß Anspruch 2 oder einem der von Anspruch 2 abhängigen Ansprüche, **dadurch gekennzeichnet, dass** der Rückstellaktuator (11) über den Bowdenzug (26) direkt auf den Haubenteil (12) wirkt.

9. Hebesystem gemäß Anspruch 5 oder einem der von Anspruch 5 abhängigen Ansprüche und gemäß Anspruch 8, **dadurch gekennzeichnet, dass** eine Hülle des Bowdenzugs (26) an den Zwischenteil (14) angebunden ist.

10. Hebesystem gemäß einem der vorhergehenden Ansprüche, **dadurch gekennzeichnet, dass** das Federelement eine Spiral- oder Schenkelfeder (17) ist oder umfasst.

11. Hebesystem gemäß einem der vorhergehenden Ansprüche, **dadurch gekennzeichnet, dass** das Hebegelenk (9) zwei Koppelteile (16) umfasst, die zusammen mit dem Haubenteil (12) einerseits und dem Karosserieteil (13) oder dem Zwischenteil (14) andererseits ein Gelenkviereck ausbilden.

12. Kraftfahrzeug (1) mit einer Karosserie, die eine Karosseriehaube (2) umfasst, und mit einem Hebesystem gemäß einem der vorhergehenden Ansprüche, wobei der Haubenteil (12) mit der Karosseriehaube (2) und der Karosserieteil (13) mit einem anderen Abschnitt der Karosserie verbunden ist.

13. Kraftfahrzeug (1) gemäß Anspruch 12, **dadurch gekennzeichnet, dass** eine Betätigung des Hebesystems mittels eines Kollisionsermittlungssystems auslösbar ist, das dazu eingerichtet ist, eine mögliche Kollision mit einem Hindernis prädiktiv zu ermitteln.

14. Kraftfahrzeug (1) gemäß Anspruch 12 oder 13, **gekennzeichnet durch** eine Ausgestaltung des Hebegelenks (9) derart, dass die Karosseriehaube (2) bei einer Bewegung von der Normalstellung in die Kollisionsstellung in Richtung des Schwerpunkts (7) des Kraftfahrzeugs (1) bewegt wird.
